# EUROPÄISCHE PATENTANMELDUNG

(11) **EP 0 614 037 A1**
(43) Veröffentlichungstag der Anmeldung: **07.09.1994**
(21) Anmeldenummer: 94103136.1
(22) Anmeldetag: 02.03.1994
(51) Int. Cl.: F16M 11/06

(54) **Deckenstativ**

(30) Priorität: 04.03.1993 DE 4306802
(71) Anmelder: Kreuzer GmbH + Co. OHG, D-82178 Puchheim (DE)
(72) Erfinder: Schönfelder, Jürgen, D-85716 Unterschleissheim (DE); Martin, Karl-Heinz, D-82284 Grafrath (DE)
(74) Vertreter: Prüfer, Lutz H., Dipl.-Phys.

(57) **Zusammenfassung**

Ein Deckenstativ (1) mit einer Deckenhalterung (2) und wenigstens einem Stativarm (3) weist zum verschwenkbaren Verbinden jeweils Drehgelenke (7) mit ersten und zweiten Lagerteilen (8, 9) auf. Damit eine einfache Möglichkeit einer Einstellung des winkelmäßigen Schwenkbereiches geschaffen wird, weist eines der Lagerteile (8) in seinem Umfang einen verstellbaren Anschlag (12) und das andere Lagerteil (9) einen damit beim Schwenken des Stativarmes in Eingriff gelangenden festen Anschlag (21) auf.

## Beschreibung

Die Erfindung betrifft ein Deckenstativ nach dem Oberbegriff des Patentanspruches 1.

Aus der DE 37 01 172 A1 ist ein Deckenstativ mit einem ersten Stativarm und einem damit über ein Drehgelenk verbundenen zweiten Stativarm bekannt. Der eine Stativarm weist auf seiner Innenseite einen Anschlag auf. Der andere Stativarm weist ein Lagerteil mit einem sich in radialer Richtung erstreckenden Anschlag auf, der beim Schwenken des Stativarmes mit dem an der Gehäuseinnenseite befindlichen festen Anschlag zur Begrenzung der Schwenkbewegung in Eingriff gelangt. Der Anschlag in dem Lagerteil ist an einem Ring angebracht. Dieser Ring wird beim Montieren in einer vorgegebenen Stellung eingeschraubt, bei der der Ansatz eine gewünschte winkelmäßige Ausrichtung besitzt. Für den Fall einer Änderung der Winkelstellung muß das Lager demontiert werden, so daß das Einstellen und insbesondere Verstellen des Schwenkbereiches erhebliche Umbauten erforderlich macht.

Aufgabe der Erfindung ist es, ein Deckenstativ der eingangs beschriebenen Art zu schaffen, bei welchem auf einfache Weise das Einstellen und Verstellen des Schwenkwinkels erreicht werden kann.

Diese Aufgabe wird durch das in Patentanspruch 1 gekennzeichnete Deckenstativ gelöst.

Weiterbildungen der Erfindung sind in den Unteransprüchen gekennzeichnet.

Weitere Merkmale und Zweckmäßigkeiten der Erfindung ergeben sich aus der Beschreibung eines Ausführungsbeispieles anhand der Figuren.

Von den Figuren zeigen:
- Fig. 1: eine Seitenansicht eines Deckenstatives;
- Fig. 2: eine teilweise entlang der Linie II-II in Fig. 1 geschnittene Darstellung vergrößerten Maßstabs;
- Fig. 3: eine Draufsicht auf einen Teil des in größerem Maßstab dargestellten Lagers, teilweise in geschnittener und teilweise in weggebrochener Darstellung;
- Fig. 4: einen Schnitt durch eine Nut und ein in diese einzuführendes Widerlagerelement;
- Fig. 5: eine der Fig. 4 entsprechende Darstellung mit eingesetztem Widerlagerelement; und
- Fig. 6: eine Seitenansicht des Lagerteiles in vergrößerter Darstellung.

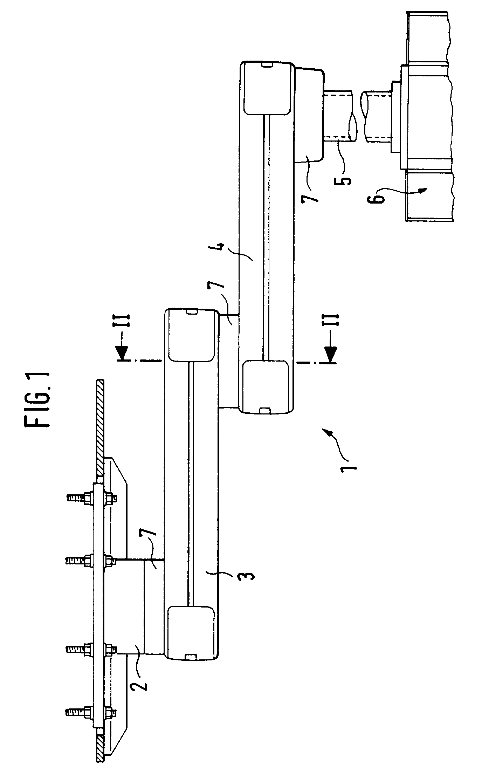

Das in Figur 1 gezeigte Deckenstativ 1 weist in bekannter Weise eine Deckenhalterung 2, einen damit verbundenen ersten Stativarm 3, einen mit diesem verbundenen zweiten Stativarm 4 und eine von letzterem getragene Säule 5 zum Aufnehmen von Lasten in Form medizinischer Geräte 6 auf. Die Deckenhalterung 2 ist mit dem ersten Stativarm 3 und dieser wiederum mit dem zweiten Stativarm 4 und einer dieser Stativarme mit Säule 5 jeweils über ein Drehgelenk 7 verbunden.

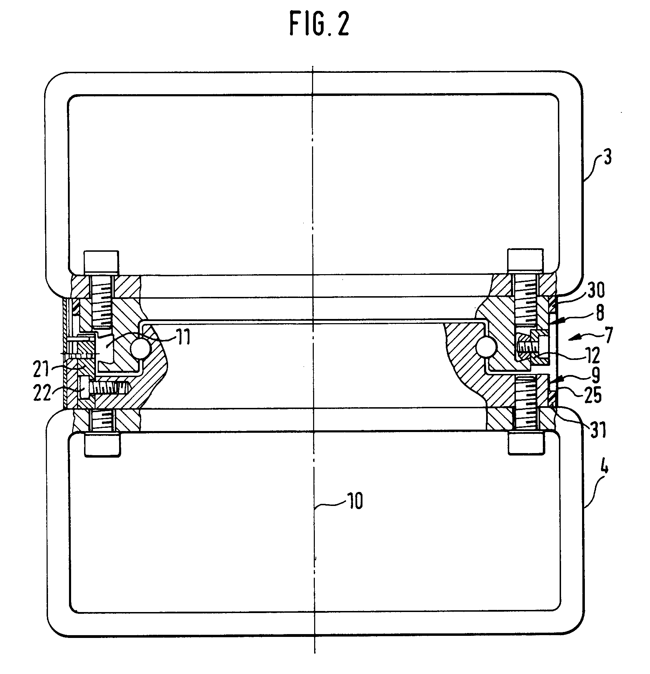

Wie am besten aus Fig. 2 ersichtlich ist, weist jedes Drehgelenk 7 ein erstes Lagerteil 8 und ein damit zusammenwirkendes zweites Lagerteil 9 auf. Das Lager hat einen üblichen Aufbau aus zwei Lagerschalen, die zylinderförmig ausgebildet und konzentrisch zur Schwenkachse 10 angeordnet sind. Jedes Lagerteil ist mit entsprechenden Verschraubungen in bekannter Weise mit dem ihm zugeordneten Teil, also der Deckenhalterung bzw. den Stativarmen verbunden.

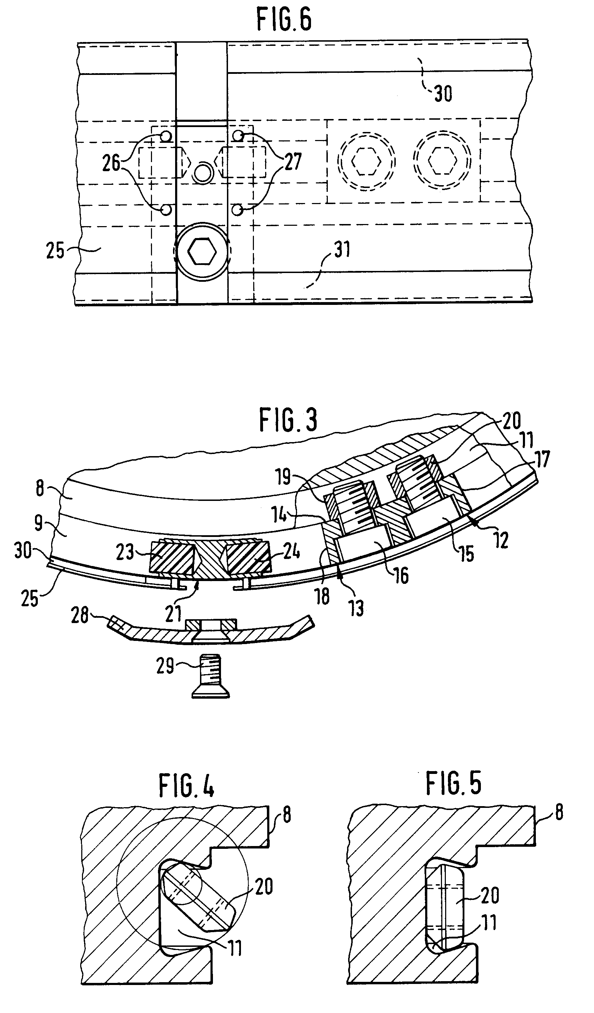

Das erste Lagerteil 8 weist auf seiner Zylinderfläche eine schwalbenschwanzförmige Nut 11 auf, die sich in Umfangsrichtung um die gesamte Zylinderfläche herum erstreckt. An dem ersten Lagerteil 8 ist ein verstellbarer Anschlag 12 befestigt. Der Anschlag 12 weist eine Anschlagplatte 13 auf. Diese besitzt eine dem Radius des die Nut 11 tragenden zylinderförmigen Abschnittes des ersten Lagerteiles entsprechend gekrümmte Innenfläche 14, die größer ist als die Öffnung der schwalbenschwanzförmigen Nut und die auf der die schwalbenschwanzförmige Nut begrenzenden Wandung des ersten Lagerteiles aufliegt. Die Anschlagplatte weist, wie am besten aus Fig. 3 ersichtlich, zwei in Umfangsrichtung einen Abstand voneinander aufweisende Bohrungen zur Aufnahme von Befestigungsschrauben 15, 16 auf. Die beiden senkrecht zur Umfangsrichtung sich erstreckenden Seitenwandungen 17, 18 sind durch die Schwenkachse 10 gehende Radialebenen. Der Anschlag umfaßt ferner zwei in der schwalbenschwanzförmigen Nut innen anliegende Widerlagerelemente 19, 20. Diese weisen ein Profil auf, das so bemessen ist, daß die Widerlagerelemente in der in den Figuren 4 und 5 gezeigten Weise durch Kippen in die schwalbenschwanzförmige Nut einsetzbar sind. Sie sind aus einem hochfesten Material und an den Enden so geformt, daß sie beim schraubenmäßigen Verbinden in die schwalbenschwanzförmige Nut zur Bildung einer festen Verbindung hineingezogen werden.

Das zweite Lagerteil 9 weist in der am besten aus Fig. 2 ersichtlichen Weise einen festen Anschlag 21 auf. Dieser ist in einem Ausschnitt geführt und mit einer Schraube 22 fest mit dem zweiten Lagerteil 9 verbunden und erstreckt sich in einer Richtung parallel zur Schwenkachse 10 so weit über den zylinderförmigen Abschnitt des ersten Lagerteiles, daß er mit dem verstellbaren Anschlag 12 beim Schwenken um die Schwenkachse 10 in Eingriff gelangt. In dem gezeigten Ausführungsbeispiel weist der feste Anschlag auf seinen beiden äußeren sich senkrecht zu der Umfangsrichtung erstreckenden Seiten Anschlagspuffer 23, 24 auf. Deren Anschlagsflächen sind ebenfalls durch die Schwenkachse 10 gehende Radialflächen. Grundsätzlich sind zwei verstellbare Anschläge 12 vorgesehen, die in Umfangsrichtung gegeneinander versetzt am ersten Lagerteil verstellbar befestigt sind. Auf diese Weise sind zwei Endstellungen eines Schwenkbereiches, der kleiner als 360° ist, einstellbar. Für den Fall, daß ein Schwenkbereich von 360° möglich ist und lediglich ein Überdrehen über eine einmalige volle Schwenkung hinaus vermieden werden soll, kann auch nur ein verstellbarer Anschlag 12 vorgesehen sein.

Damit im Betrieb ein wirksamer Schutz gegen Verletzungen besteht, ist ein Abdeckring 25 vorgesehen. Dieser ist als rechteckförmiger Streifen aus einem eine ausreichende Elastizität aufweisenden Kunststoff- oder Federblech gefertigt. Die Breite des Streifens entspricht dem Abstand der durch das Drehgelenk zu verbindenden Teile, in dem in Figur 2 gezeigten Ausführungsbeispiel also der beiden Stativarme 3 und 4, wobei die Abmessung um soviel kleiner als der Abstand ist, daß die Stativarme nicht an dem Ring schleifen und beim Schwenken keine Kraft auf den Ring unmittelbar ausüben. Die freien Enden des Ringes weisen Stiftlöcher 26, 27 auf. Der feste Anschlag 21 besitzt der Anordnung der Stiftlöcher und deren Durchmesser entsprechende sich senkrecht auf seiner Ebene erstreckende Stifte. Nach Einstellen der Position des bzw. der verstellbaren Anschläge 12 wird der elastische Abdeckring 25 einfach um das Lager herumgelegt und mit den endseitigen Löchern 26, 27 auf die entsprechenden Stifte im festen Anschlag eingesteckt. Damit sich der zum Abdeckring geformte ursprünglich gerade Streifen gleichmäßig um die Umfänge der beiden Lagerhälften legt, ist die Innenseite des Streifens auf nahezu Umfanglänge von Stiftpaar zu Stiftpaar parallel zur Ober- und Unterkante mit je einem elastischen, schaum- oder schwammartigem Rechteckprofilstreifen 30, 31 belegt.

Die Elastizität der Rechteckprofilstreifen 30, 31 erlaubt es, daß sich die Umfangslänge des Abdeckringes vergrößert und daß sich dessen verbleibendes freies Ende auf ein Stiftpaar aufstecken läßt, und sorgt im aufgesteckten Zustand für Spannung zwischen den Umfängen beider Lagerhälften und dem Abdeckring. Zusätzlich dienen die elastischen Rechteckprofilstreifen als Dichtung gegen Eindringen von - im vorliegenden Falle - Desinfektions-Flüssigkeit. Von außen wird ein Abdeckprofil 28 mit einer Schraube 29 über die freien Enden des Abdeckringes geschraubt, um ein unbeabsichtigtes Lösen des Abdeckringes 25 zu vermeiden und die Nahtstelle abzudecken.

## Patentansprüche

1. Deckenstativ (1) mit einer Deckenhalterung (2), wenigstens einem ersten Stativarm (3) und einer von einem Stativarm getragenen Säule (5) zum Tragen von Geräten (6) und ähnlichem, und einem Drehgelenk (7) zwischen der Deckenhalterung (2) und dem ersten Stativarm (3) bzw. dem ersten Stativarm (3) und weiteren damit verbundenen Stativarmen (4) bzw. der Säule (5) zum jeweiligen schwenkbaren Verbinden, mit einem ersten Lagerteil (8) und einem zweiten Lagerteil (9), die in dem aneinandergrenzenden Bereich jeweils einen kreisrunden Abschnitt und eines der Lagerteile (8) einen ersten Anschlag (12) und das andere Lagerteil (9) einen damit beim Schwenken des Stativarmes in Eingriff gelangenden festen Anschlag (21) aufweisen, dadurch gekennzeichnet, daß das den ersten Anschlag (12) tragende Lagerteil (8) eine sich in Umfangsrichtung erstreckende Nut (11) aufweist und der erste Anschlag (12) darin verstellbar befestigt ist.

2. Deckenstativ nach Anspruch 1, dadurch gekennzeichnet, daß die Nut (11) schwalbenschwanzförmig ausgebildet ist.

3. Deckenstativ nach Anspruch 1 oder 2, dadurch gekennzeichnet, daß wenigstens einer der Anschläge mit dem anderen Anschlag in Eingriff bringbare Seitenflächen (17, 18) aufweist, die in durch die Drehachse (10) des Lagers gehenden Radialebenen liegen.

4. Deckenstativ nach einem der Ansprüche 1 bis 3, dadurch gekennzeichnet, daß der verstellbare Anschlag (12) ein außen auf der Wandung (13) der Nut (11) aufliegendes plattenförmiges Anschlagsteil (13) mit zwei in Umfangsrichtung gegeneinander versetzten, sich radial erstreckenden Bohrungen, zwei in der Nut (11) befindliche Widerlagerelemente (19, 20) und zwei sich durch die Bohrungen erstreckende Schrauben (15, 16), die das Anschlagteil (13) und die Widerlagerelemente (19, 20) verbinden, aufweist.

5. Deckenstativ nach Anspruch 4, dadurch gekennzeichnet, daß die Widerlagerelemente (19, 20) so bemessen sind, daß sie durch Kippen von außen in die Nut (11) einsetzbar sind.

6. Deckenstativ nach Anspruch 4 oder 5, dadurch gekennzeichnet, daß die Widerlagerelemente (19, 20) von ihren Schnittkanten her so gerundet und nur so lang sind, daß ein großer Teil an den wirksamen Flanken der Nut (11) anliegt.

7. Deckenstativ nach einem der Ansprüche 2 bis 6, dadurch gekennzeichnet, daß einer der Anschläge (21) auf den beiden mit dem jeweils anderen Anschlag (12) in Eingriff bringbaren Seiten elastisch ausgebildete Puffer (23, 24) aufweist.

8. Deckenstativ nach einem der Ansprüche 2 bis 7, dadurch gekennzeichnet, daß der Winkel der Schwalbenschwanzflächen mehr als 10° und vorzugsweise zwischen 10° und 50° beträgt.

9. Deckenstativ nach einem der Ansprüche 1 bis 8, gekennzeichnet durch einen die Bewegungsbahn der Anschläge (12, 21) abdeckenden Abdeckring (25).

10. Deckenstativ nach Anspruch 9, dadurch gekennzeichnet, daß der Abdeckring aus elastischem Material gefertigt ist.

11. Deckenstativ nach Anspruch 9 oder 10, dadurch gekennzeichnet, daß der Abdeckring (25) als rechteckförmiger Streifen ausgebildet ist und nahe seiner beiden längsseitigen Enden Löcher (26, 27) aufweist, daß der feste Anschlag (21) den Löchern (26, 27) entsprechende Stifte aufweist und der Abdeckring (25) mit den Löchern (26, 27) an den Stiften des Anschlages (21) abnehmbar befestigt ist.

12. Deckenstativ nach einem der Ansprüche 9 bis 11, dadurch gekennzeichnet, daß auf der Innenseite des Abdeckringes (25) am oberen und unteren Rand jeweils ein elastisch nachgebender Dichtungsstreifen (30, 31) mit rechteckförmigem Querschnitt vorgesehen ist.
